Europäisches Patentamt

European Patent Office

Office européen des brevets

(19)

(11) Veröffentlichungsnummer: **0 226 008**
**B1**

(12) **EUROPÄISCHE PATENTSCHRIFT**

(45) Veröffentlichungstag der Patentschrift:
**04.01.89**

(21) Anmeldenummer: **86114958.1**

(22) Anmeldetag: **28.10.86**

(51) Int. Cl.⁴: **B65G 1/10**

(54) **Magazin zum Stapeln von Blechteilen, insbesondere für die Herstellung von Dosen.**

(30) Priorität: **01.11.85 CH 4709/85**

(43) Veröffentlichungstag der Anmeldung:
**24.06.87 Patentblatt 87/26**

(45) Bekanntmachung des Hinweises auf die Patenterteilung:
**04.01.89 Patentblatt 89/1**

(84) Benannte Vertragsstaaten:
**CH DE ES FR GB GR IT LI NL SE**

(56) Entgegenhaltungen:
**CA-A- 1 169 818**

(73) Patentinhaber: **ELPATRONIC AG, Baarerstrasse 117, CH-6300 Zug(CH)**

(72) Erfinder: **Kramer, Felix, Im Aemmet 3, CH-8964 Friedlisberg(CH)**

(74) Vertreter: **Hotz, Klaus, Dipl.-El.-Ing. / ETH, c/o SOUDRONIC AG Industriestrasse 35 Postfach 11, CH-8962 Bergdietlkon(CH)**

## Beschreibung

Die Erfindung betrifft ein Magazin zum Stapeln von Blechteilen, insbesondere für die Herstellung von Dosen, mit Säulen, an denen voneinander abgewandte Kanten der Blechteile geführt sind.

Solche Magazine werden beispielsweise entsprechend der Europäischen Patentanmeldung Nr. 8 6103 007.0 an Schweissmaschinen zum Anschweissen von Laschen an Blechteile verwendet, die anschliessend zu zylindrischen Dosenzargen verarbeitet werden. Bei solchen und anderen Verwendungen gattungsgemässer Magazine kommt es darauf an, dass sie auf einfache Weise mit Stapeln von Blechteilen beschickt werden können und diese Blechteile in einer genau definierten Lage derart bereithalten, dass sie mittels eines automatisch arbeitenden Abstaplers einzeln entnommen und in einer ebenso genau vorbestimmten Lage abseits des Magazins abgelegt werden können, beispielsweise auf einem Förderer, der sie der weiteren Verarbeitung zuführt. Andererseits muss zwischen den Säulen eines gattungsgemässen Magazins ein Freiraum vorgesehen sein, der um einen Toleranzbereich grösser ist als der Platzbedarf des Stapels von Blechteilen, der in das Magazin eingebracht werden soll. Gewisse Toleranzen ergeben sich schon beim Zuschneiden oder Zustanzen der einzelnen Blechteile und ausserdem lässt sich beim Stapeln ein seitlicher Versatz der Blechteile gegeneinander nicht immer vollständig vermeiden.

Der Erfindung liegt die Aufgabe zugrunde, ein Magazin der eingangs beschriebenen Gattung derart weiterzubilden, dass es im Stande ist, trotz der genannten Ungenauigkeiten jedes einzelne in ihm gestapelte Blechteil in einer möglichst genau vorbestimmten Lage zum Abstapeln bereitzuhalten.

Die Aufgabe ist erfindungsgemäss dadurch gelöst, dass mindestens eine Säule eine federnd nachgiebige Leiste zur Ausübung eines elastischen Druckes auf die zugehörigen Kanten der zwischen dieser Säule und einer gegenüberliegenden starren Säule gestapelten Blechteile aufweist.

Bei Blechteilen, die im Verhältnis zu ihren Flächenabmessungen nicht allzu dünn sind und dementsprechend eine ausreichende Steifigkeit haben, kann es genügen, wenn die federnd nachgiebige Leiste auf den Blechstapel eine von dessen Höhe im wesentlichen unabhängige seitliche Kraft ausübt. Wenn die einzelnen Blechteile jedoch verhältnismässig dünn und dementsprechend leicht verbiegbar sind, was auf die meisten Dosenbleche zutrifft, könnte eine im wesentlichen konstante von der Leiste auf den Blechstapel ausgeübte Kraft zu gross werden, wenn der Stapel grossenteils abgearbeitet worden ist und das letzte im Magazin verbleibende Blechteil schliesslich mit der gesamten Kraft der Druckleiste belastet wird.

Um dies zu vermeiden, ist die Erfindung vorzugsweise dadurch weitergebildet, dass die federnd nachgiebige Leiste in mehrere untereinander angeordnete Druckstücke aufgeteilt ist, die einzeln federnd abgestützt sind.

Dabei ist es vorteilhaft, wenn die Druckstücke in einer gemeinsamen senkrechten Nut der zugehörigen Säule aufgenommen sind.

Damit die Blechteile sich nicht in Fugen zwischen den einzelnen Druckstücken fangen können, ist es ferner vorteilhaft, wenn die Druckstücke an ihren aneinandergrenzenden Enden von einer waagerechten Ebene abweichende Flächen aufweisen.

Ein Ausführungsbeispiel der Erfindung wird im folgenden mit weiteren Einzelheiten anhand schematischer Zeichnungen beschrieben. Es zeigt:

Fig. 1 die Draufsicht eines erfindungsgemässen Magazins mit zugehörigen weiterfördernden Vorrichtungen,

Fig. 2 die Seitenansicht in Richtung des Pfeils II in Fig. 1,

Fig. 3 den senkrechten Querschnitt III-III in Fig. 2,

Fig. 4 eine Teilansicht in Richtung des Pfeils IV in Fig. 3 und

Fig. 5 den Teilschnitt V-V in Fig. 4.

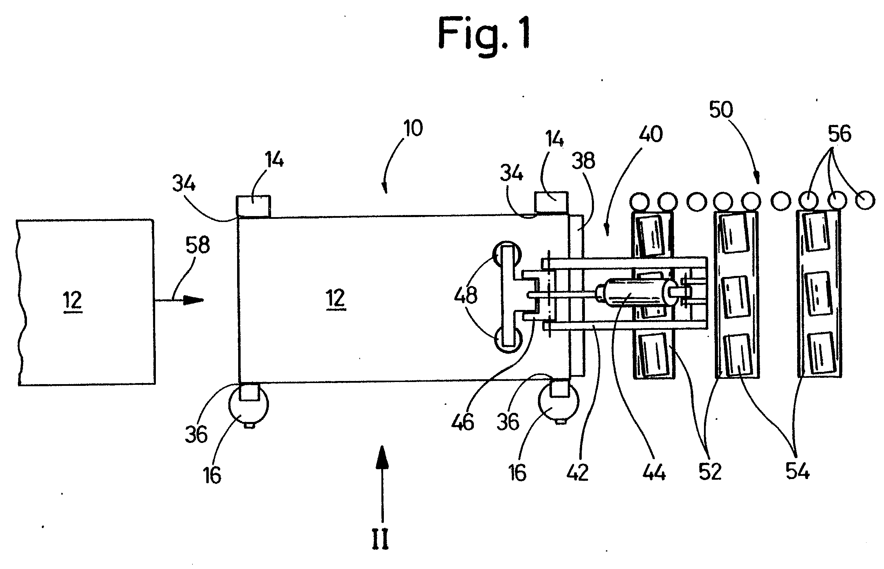

In Fig. 1 bis 3 ist ein Magazin 10 dargestellt, das einen Stapel rechteckiger Blechteile 12, beispielsweise aus Weissblech von 0,2 mm Dicke, enthält. Zum Magazin 10 gehören zwei einteilige Säulen 14 von im wesentlichen rechteckigem Querschnitt sowie zwei mehrteilige Säulen 16 von im wesentlichen kreisförmigem Querschnitt. Sämtliche Säulen 14 und 16 erstrecken sich senkrecht von einer gemeinsamen Grundplatte 18 aus nach oben; die beiden mehrteiligen Säulen 16 sind entsprechend der Breite der Blechteile 12 einstellbar.

Jeder der beiden mehrteiligen Säulen 16 weist mehrere, im dargestellten Beispiel zehn Druckstücke 20 von im wesentlichen rechteckigem Querschnitt auf, die lückenlos übereinander in einer senkrechten Nut 22 angeordnet und in dieser Nut waagerecht, in Richtung zu der gegenüberliegenden einteiligen Säule 14 hin und von dieser weg verschiebbar sind. In der senkrechten Nut 22 münden hinter jedem der Druckstücke 20 zwei senkrecht übereinander angeordnete radiale Bohrungen 24; in diesen Bohrungen ist je eine Schraube 26 geführt, die mit dem zugehörigen Druckstück 20 verschraubt ist und dessen Bewegung zur gegenüberliegenden Säule 14 hin begrenzt.

Jede der Schrauben 26 ist von einer wendelförmigen Druckfeder 28 umgeben, die zwischen dem zugehörigen Druckstück 20 und einer Schulter 30 der zugehörigen Bohrung 24 mit Vorspannung eingebaut ist. Jedes Paar zusammengehöriger Druckfedern 28 ist somit bestrebt, das zugehörige Druckstück 20 soweit wie möglich aus der senkrechten Nut 22 der betreffenden mehrteiligen Säule 16 heraus, zur gegenüberliegenden einteiligen Säule 14 hin, zu drücken.

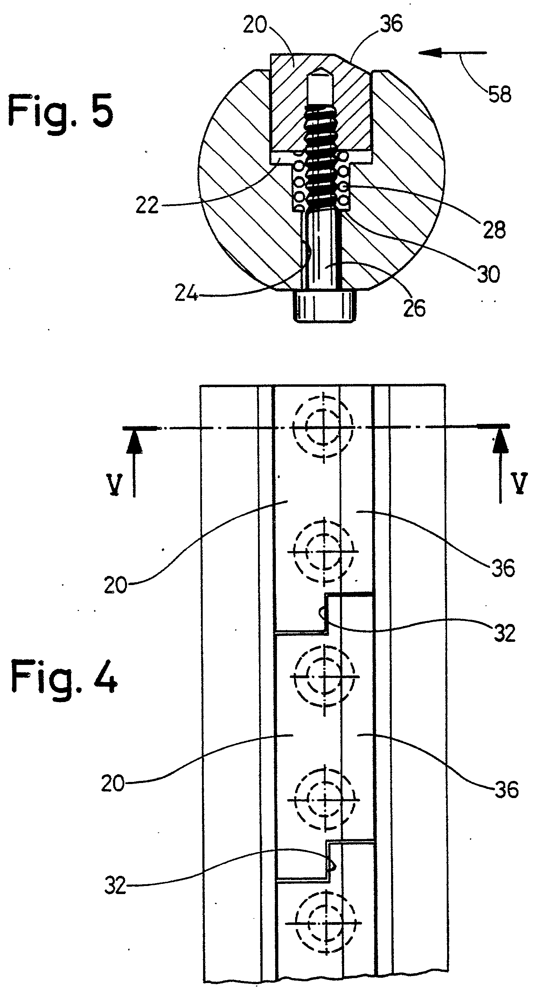

Die Druckstücke 20 sind an ihren übereinanderliegenden Enden derart abgestuft, dass sie dort, wie aus Fig. 4 ersichtlich ist, je eine senkrechte Fläche 32 aufweisen, die in der gemeinsamen Ebene der Achsen der Schrauben 26 liegt. Diese abgestufte Gestaltung verhindert mit Sicherheit, dass die Blechteile 12 in Fugen zwischen den Druckstücken 20 eindringen und dort hängenbleiben. Die Druckstücke 20 werden jedoch durch diese abgestufte Gestaltung nicht an voneinander unabhängigen federnden Bewegungen in Achsrichtung der zugehörigen Schrauben 26 gehindert.

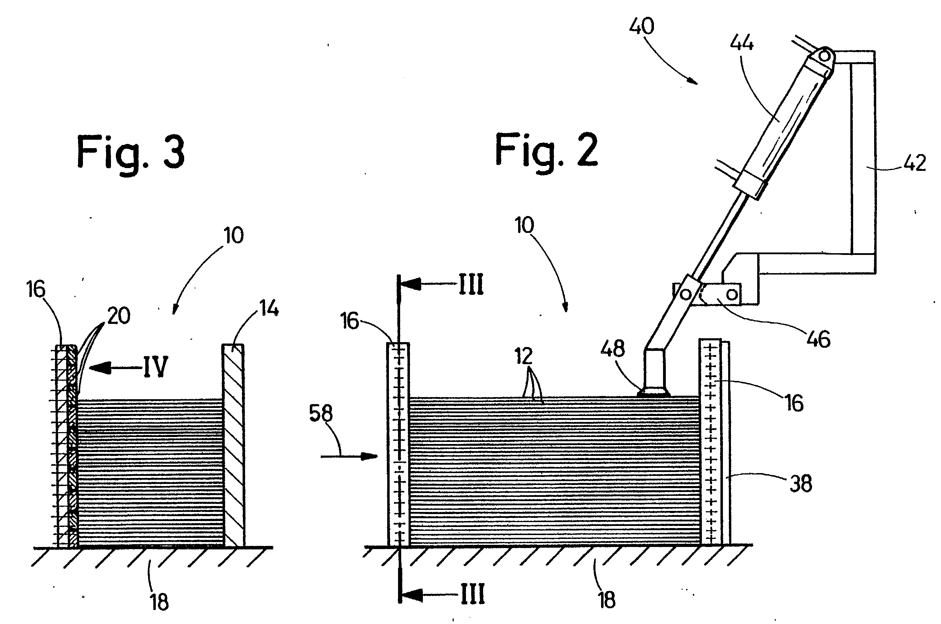

Das Magazin 10 ist an seiner in Fig. 1 und 2 linken Seite offen. Um das Einschieben eines Stapels aus Blechteilen 12 von links her zu erleichtern, haben die einteiligen Säulen 14 je eine Abschrägung 34; in entsprechender Weise ist an den Druckstücken 20 je eine Abschrägung 36 ausgebildet. Auf der in Fig. 1 und 2 rechten Seite ist das Magazin 10 durch einen Anschlag 38 in Form einer senkrechten Platte abgeschlossen.

Dem Magazin 10 ist ein Abstapler 40 zugeordnet; zu diesem gehört ein Gestell 42, das senkrecht auf- und ab- sowie waagerecht in Längsrichtung der Blechteile 12 hin- und herbeweglich ist. Am Gestell 42 ist oben der Zylinder einer pneumatischen Kolbenzylindereinheit 44 und weiter unten ein Lenker 46 in der senkrechten Längsmittelebene des Magazins 10, parallel zur Zeichenebene der Fig. 2, schwenkbar gelagert. Am Lenker 46 ist die Kolbenstange der Kolbenzylindereinheit 44 gelagert, an der ein Paar Sauger 48 befestigt ist. Der Abstapler 40 ist in Fig. 1 und 2 in einer Stellung abgebildet, in der seine beiden Sauger 48 dabei sind, das oberste Blechteil 12 im Magazin 10 zu erfassen.

Dem Abstapler 40 ist ein Rollenförderer 50 nachgeordnet; zu diesem gehören untere Rollen 52 und obere Rollen 54, die um je eine waagerechte Achse drehantreibbar sind, wobei sich die Achsen der oberen Rollen 54 schräg zu denen der unteren Rollen 52 erstrecken. Nach einer Seite hin ist der Rollenförderer 50 durch seitliche Rollen 56 begrenzt, deren Achsen in einer zur Längsmittelebene des Magazins 10 parallelen senkrechten Ebene liegen.

In Fig. 1 ist mit einem Pfeil 58 angedeutet, dass das Magazin 10 mit einem Stapel aus Blechteilen 12 beschickt wird, indem dieser Stapel von links her zwischen die Säulenpaare 14 und 16 bis zum Anschlag 38 eingeschoben wird. Beim Einschieben des Stapels werden die Druckstücke 20 an den beiden Säulen 16 etwas zurückgedrängt, wodurch die Vorspannung der Druckfedern 28 entsprechend verstärkt wird. Die Blechteile 12 werden dann von den Druckstücken 20 gegen die gegenüberliegenden, starren Säulen 14 gedrängt und dadurch in einer genau vorbestimmten Lage gehalten. Die Schrauben 26, die den Federweg des obersten Druckstücks 20 an jeder der beiden Säulen 16 begrenzen, sind vorzugsweise so eingestellt, dass diese beiden Druckstücke nahezu oder vollständig drucklos an den oberen der gestapelten Blechteile 12 anliegen oder diesen sogar ein sehr kleines Spiel lassen und somit das Entnehmen der Blechteile nicht behindern.

Beim Abstapeln werden die Blechteile 12 einzeln entnommen, wobei die Sauger 48 beim Einfahren der Kolbenzylindereinheit 44 jeweils eine bogenförmige Bewegung nach oben ausführen, bei der sich die Vorderkante des betreffenden Blechteils 12 etwas vom Anschlag 38 entfernt und schliesslich über diesen hinweggehoben wird. Das Vereinzeln der Blechteile 12 wird durch gekannte Massnahmen gefördert, beispielsweise durch gleichnamige Magnetisierung übereinanderliegender Kanten der Blechteile 12 und/oder durch einen gegen diese Kanten gerichteten Luftstrom.

Jedes Blechteil 12, das vom Abstapler 40 über den Anschlag 38 hinweggehoben worden ist, wird anschliessend derart abgesenkt, dass es zwischen die Rollen 52 und 54 des Rollenförderers 50 gelangt und von diesen erfasst und weiterbewegt wird. Dank ihrer genauen Positionierung im Magazin 10 erreichen die Blechteile 12 den Rollenförderer 50 in einer genau vorbestimmten Lage, in der sie nur einen sehr geringen Abstand von den seitlichen Rollen 56 haben. Beim Weiterförœrn bewirken die schräggestellten oberen Rollen 54 dann, dass die Blechteile 12 nach einer sehr kurzen Föderstrecke an den seitlichen Rollen 56 anliegen und dadurch für eine Weiterverarbeitung positioniert sind, beispielsweise zum Anbringen von Längsritzungen, die einen Aufreissstreifen begrenzen.

## Patentansprüche

1. Magazin zum Stapeln von Blechteilen, insbesondere für die Herstellung von Dosen, mit Säulen (14, 16), an denen voneinander abgewandte Kanten der Blechteile (12) geführt sind, dadurch gekennzeichnet, dass mindestens eine Säule (16) eine federnd nachgiebige Leiste zur Ausübung eines elastischen Druckes auf die zugehörigen Kanten der zwischen dieser Säule (16) und einer gegenüberliegenden starren Säule (14) gestapelten Blechteile (12) aufweist.

2. Magazin nach Anspruch 1, dadurch gekennzeichnet, dass die federnd nachgiebige Leiste in mehrere untereinander angeordnete Druckstücke (20) aufgeteilt ist, die einzeln federnd abgestützt sind.

3. Magazin nach Anspruch 2, dadurch gekennzeichnet, dass die Druckstücke (20) in einer gemeinsamen senkrechten Nut (22) der zugehörigen Säule (16) aufgenommen sind.

4. Magazin nach Anspruch 2 oder 3, dadurch gekennzeichnet, dass die Druckstücke (20) an ihren aneinandergrenzenden Enden von einer waagerechten Ebene abweichende Flächen (32) aufweisen.

## Claims

1. A magazine for stacking sheet-metal members, particularly for the production of cans, having columns (14, 16) on which mutually remote edges of the sheet-metal members (12) are guided, characterised in that at least one column (16) comprises a resiliently flexible strip to exert a resilient pressure on the associated edges of the sheet-metal members (12) stacked between this column (16) and an opposite, rigid column (14).

2. A magazine as claimed in claim 1, characterised in that the resiliently flexible strip is divided into a plurality of pressure members (20) which are disposed one below the other and are individually resiliently supported.

3. A magazine as claimed in claim 2, characterised in that the pressure members (20) are received in a common vertical groove (22) in the associated column (16).

4. A magazine as claimed in claim 2 or 3, characterised in that the pressure members (20) comprise surfaces (32) deviating from a horizontal plane at their adjoining ends.

**Revendications**

1. Magasin pour empiler des pièces en tôle, notamment pour la fabrication de boîtes, comportant des colonnes (14, 16), le long des bords en vis-à-vis opposés desquelles les pièces de tôle (12) sont guidées, caractérisé en ce qu'au moins une colonne (16) possède une barrette apte à fléchir élastiquement et servant à appliquer élastiquement une pression aux bords associés des pièces en tôle (12) empilées entre cette colonne (16) et une colonne rigide (14) disposée en vis-à-vis.

2. Magasin selon la revendication 1, caractérisé en ce que la barrette apte à fléchir élastiquement est subdivisée en plusieurs éléments de compression superposés (20), qui sont individuellement suspendus élastiquement.

3. Magasin selon la revendication 2, caractérisé en ce que les éléments de compression (20) sont logés dans une rainure verticale commune (22) de la colonne associée (16).

4. Magasin selon la revendication 2 ou 3, caractérisé en ce que les éléments de compression (20) comportent, au niveau de leurs extrémités contiguës, des surfaces (32) qui s'écartent d'un plan horizontal.

# Fig.1

EP 0 226 008 B1

# Fig. 2

# Fig. 3

# Fig. 5

20   36

58

22

28

30

24   26

# Fig. 4

V   V

20

36

32

20   36

32